# EUROPÄISCHE PATENTANMELDUNG

(11) **EP 3 594 041 A1**
(43) Veröffentlichungstag der Anmeldung: **15.01.2020**
(21) Anmeldenummer: 19184297.0
(22) Anmeldetag: 04.07.2019
(51) Int. Cl.: B60K 25/08

(54) **ACHSEN-GENERATOR-EINHEIT MIT VEREINFACHTEM AUFBAU**

(30) Priorität: 13.07.2018 DE 202018104062 U
(71) Anmelder: Hübner GmbH & Co. KG, 34123 Kassel (DE)
(72) Erfinder: Scharf, Lothar, 37242 Bad Sooden-Allendorf (DE); Ebert, Jörg, 50858 Köln (DE)
(74) Vertreter: Patentanwälte Walther Hinz Bayer PartGmbB

(57) **Zusammenfassung**

Gegenstand der Erfindung ist eine Achsen-Generator-Einheit (1) für ein Fahrzeug, insbesondere Nutzfahrzeug oder Anhänger, mit einem Generator (10) zur Erzeugung von elektrischem Strom, wobei der Generator (10) zwischen einer ersten Achswelle (12a) und einer zweiten Achswelle (12b) angeordnet und mittels einer Antriebsverbindung mit diesen antriebsverbunden ist, wobei zwischen den beiden Achswellen (12a, 12b) ein einziger Generator (10) vorgesehen ist und die Antriebsverbindung zwischen den Achswellen (12a, 12b) und dem Generator (10) wenigstens eine Freilaufeinheit (13, 13') aufweist.

## Beschreibung

Die Erfindung betrifft eine Achsen-Generator-Einheit für ein Fahrzeug, insbesondere Nutzfahrzeug oder Anhänger, mit einem Generator zur Erzeugung von elektrischem Strom, wobei der Generator zwischen einer ersten Achswelle und einer zweiten Achswelle angeordnet und mittels einer Antriebsverbindung mit diesen antriebsverbunden ist.

### STAND DER TECHNIK

Moderne Nutzfahrzeuge und Anhänger können Verbraucher aufweisen, die nicht über die Brennkraftmaschine des Fahrzeugs angetrieben oder gespeist werden, und es ist bekannt, Achsen von Nutzfahrzeugen oder Anhängern mit Generatoren auszustatten, die beim Betrieb des Fahrzeugs elektrischen Strom erzeugen und damit die Energie bereitstellen, die von entsprechenden Verbrauchern genutzt werden kann.

Derartige Verbraucher sind beispielsweise Kühlaggregate in Anhängern von LKWs, oder es können Hebebühnen oder Hubvorrichtungen mit elektrischer Energie betrieben werden, die über eine Batterie von einem Generator in der Achse des Nutzfahrzeugs oder des Anhängers gespeist werden. Dabei handelt es sich insbesondere um größere Verbraucher, für die die Leistung des Bordnetzes des Fahrzeugs nicht ausreicht, sodass zusätzliche Energiequellen bereitgestellt werden müssen. Solche Energiequellen können zwar prinzipiell in Form von Generatoren in der Zugmaschine eingebaut werden. Allerdings ist der Bauraum hierfür beschränkt und eine Vergrößerung des zur Verfügung stehenden Bauraums lässt sich bei Karosserieherstellern aufgrund der vergleichsweise geringen Stückzahlen von Fahrzeugen mit entsprechend großen elektrischen Verbrauchern nicht durchsetzen.

Ferner ist ohnehin bei Anhängerfahrzeugen die elektrische Leistung gesetzlich limitiert, die von der Zugmaschine auf den Anhänger übertragen werden kann. Aus diesem Gründen besitzen Anhänger mit großen elektrischen Verbrauchern zusätzliche Verbrennungsmotoren zur Erzeugung der benötigten elektrischen Energie, die einerseits wartungsbedürftig sind und andererseits im Betrieb eine zusätzliche und teilweise störende Lärmquelle bilden. Außerdem tragen diese zusätzlichen Verbrennungsmotoren zu einem zusätzlichen Schadstoffausstoß bei. Daher bietet es sich an, Generatoren in Achsen zu integrieren, wobei die Generatoren durch die passive Drehbewegung der beim Betrieb des Fahrzeugs nicht von der Brennkraftmaschine aktiv angetriebenen Achsen angetrieben werden.

Beispielsweise offenbart die DE 10 2013 009 188 A1 eine Achsen-Generator-Einheit für ein Fahrzeug, insbesondere Nutzfahrzeug oder Anhänger, mit zwei Generatoren zur Erzeugung von elektrischem Strom, wobei die Generatoren in einem als Teil einer Achse des Fahrzeugs ausgebildeten Achsrohr aufgenommen sind.

Nachteilhafterweise müssen zwei Generatoren in der Achsen-Generator-Einheit vorgesehen werden, wobei jeder der beiden Generatoren mit einem der beiden Räder verbunden ist, die an der Achse aufgenommen sind. Die mechanische Trennung der Generatoren und Zuordnung zu den jeweiligen Rädern an der Achse ist notwendig, um mit der Achse auch Kurvenfahrten zu ermöglichen, durch die unterschiedliche Drehgeschwindigkeiten der Räder erzeugt werden.

Zwar könnte das Nutzfahrzeug oder der Anhänger mit einer Starrachse ausgestattet werden, an dem der Generator antreibend angebunden ist, jedoch ergibt sich dadurch ein deutlich schlechteres Fahrverhalten, insbesondere in Kurven. Folglich werden zwei Generatoren in der Achse integriert, wobei jedem Generator auch ein eigenes Getriebe zugeordnet werden muss, welches in der Regel notwendig ist, um die Drehzahl der Achse an die notwendige Drehzahl des Generators anzupassen.

Eine Achsen-Generator-Einheit mit zwei Generatoren und jeweils den Generatoren zugeordneten Getrieben ist dabei in der Konstruktion aufwändig und kostenintensiv. Zwar können Differenzialgetriebe vorgesehen sein, die einen separaten Abgriff für die antreibende Verbindung mit dem Generator schafft, jedoch ist auch ein solches Differentialgetriebe kostenintensiv. Zusätzlich ergibt sich ein höheres Gewicht der Achsen-Generator-Einheit, das stets zu vermeiden ist.

### OFFENBARUNG DER ERFINDUNG

Aufgabe der Erfindung ist die Weiterbildung einer Achsen-Generator-Einheit mit einem vereinfachten Aufbau. Insbesondere soll die Achsen-Generator-Einheit nur einen Generator aufweisen, der mit beiden Rädern angetrieben werden kann, die an der Achse aufgenommen sind.

Diese Aufgabe wird ausgehend von einer Achsen-Generator-Einheit gemäß dem Oberbegriff des Anspruchs 1 in Verbindung mit den kennzeichnenden Merkmalen gelöst. Vorteilhafte Weiterbildungen der Erfindung sind in den abhängigen Ansprüchen angegeben.

Die Erfindung schließt die technische Lehre ein, dass zwischen den beiden Achswellen ein einziger Generator vorgesehen ist und die Antriebsverbindung zwischen den Achswellen und dem Generator weist wenigstens eine Freilaufeinheit auf.

Freilaufeinheiten ermöglichen zwischen beispielsweise einem Innenringkörper und einem Außenringkörper eine drehmomentstarre Verbindung in einer ersten Drehrichtung der Körper relativ zueinander. In einer entgegengesetzten Richtung ergibt sich hingegen ein Freilauf. Wird wenigstens ein Freilauf zwischen den Achswellen und der Antriebsverbindung angeordnet, so kann bei einer Kurvenfahrt eine unterschiedliche Drehzahl der Räder, die an der Achse aufgenommen sind, ausgeglichen werden. Folglich können auch unterschiedliche Drehgeschwindigkeiten der Achswellen zueinander vorherrschen, ohne dass dies zu einem Blockieren der Achsen-Generator-Einheit führt. Insbesondere ist es so nicht zwingend erforderlich, zwei Generatoren vorzusehen. Vielmehr ist bereits ein Generator ausreichend, welcher ein Antriebsmoment von sowohl der ersten als auch der zweiten Achswelle erhält. Indem beide Räder bzw. Achswellen zum Antrieb des Generators genutzt werden können, kommt es - anders als wenn nur ein Rad bzw. eine Achswelle den Generator antreiben würde - im Mittel zu einer im Wesentlichen gleichmäßigen Belastung beider Achswellen und Räder.

Die angegebene Anordnung der Freilaufeinheit zwischen den beiden Achswellen und dem einzigen Generator bezieht sich dabei auf eine funktionale Anordnung und nicht zwingend auf eine räumliche Anordnung. Erfindungsgemäß ist die Zwischenanordnung der Freilaufeinheit so vorgesehen, dass der Kraftfluss der Achswellen und dem einzigen Generator über die Freilaufeinheit verläuft, ohne dass dies eine räumliche Einschränkung bedeutet.

Insbesondere ist vorgesehen, dass die Antriebsverbindung zwei Freilaufeinheiten aufweist: Eine erste Freilaufeinheit ist Teil der Antriebsverbindung zwischen dem Generator und der ersten Achswelle und eine zweite Freilaufeinheit ist Teil der Antriebsverbindung zwischen dem Generator und der zweiten Achswelle. Somit kann entweder die erste oder die zweite Achswelle eine höhere Drehzahl aufweisen, und entweder die erste oder die zweite Freilaufeinheit gleicht die unterschiedliche Drehzahl aus. Im Ergebnis ist es möglich, auch ohne Verwendung eines Differentialgetriebes oder einer sonstigen Kupplungsanordnung nur einen Generator der Achsen-Generator-Einheit vorzusehen, welcher von beiden Rädern und somit durch beide Achswellen angetrieben werden kann.

Beispielsweise sind eine erste Freilaufeinheit zwischen einem Getriebe und der Achswelle und eine zweite Freilaufeinheit zwischen einem weiteren Getriebe und der zweiten Achswelle angeordnet. Die Getriebe wirken jeweils mit dem gleichen Generator zusammen. Beispielsweise kann ein Generator entlang seiner Längsachse im Bereich seines ersten Endes das erste Getriebe und im Bereich seines zweiten Endes das zweite Getriebe aufweisen.

Mit besonderem Vorteil ist vorgesehen, dass die Freilaufeinheit mit einem ersten Eingangselement und mit einem zweiten Eingangselement ausgebildet ist. Die Eingangselemente wirken über jeweilige Klemmkörper mit nur einem einzigen Ausgangselement der Freilaufeinheit zusammen. Dieses Ausgangselement der Freilaufeinheit kann einen Außenring der Freilaufeinheit bilden, mit dem die Klemmkörper beider Eingangselemente zusammenwirken. Der Außenring kann schließlich mit einem einzigen Getriebe wirkverbunden sein, welches schließlich mit dem Generator verbunden ist. Dadurch ergibt sich ein besonders einfacher Aufbau und es ist nur ein einziges Getriebe mit einem einzigen Freilauf notwendig, wobei der einzige Freilauf doppelwirkend ist.

Schließlich ist gemäß einer Weiterführung der Achsen-Generator-Einheit mit besonderem Vorteil vorgesehen, dass die erste Achswelle und die zweite Achswelle mit der Freilaufeinheit, mit dem Generator und mit dem Getriebe in einer gemeinsamen Wirkachse angeordnet sind. Dadurch ergibt sich ein minimaler Bauraum der Achsen-Generator-Einheit, sodass keine weiteren konstruktiven Änderungen am Anhänger oder Nutzfahrzeug notwendig werden. Insbesondere können diese Bauteile so besonders kompakt gemeinsam in einem Gehäuse untergebracht werden, z. B. in einem Achsrohr der Achse.

Alternativ besteht die Möglichkeit, dass der Generator und das Getriebe in einer Generatorachse angeordnet sind und dass die erste Achswelle und die zweite Achswelle mit der Freilaufeinheit in einer parallel zur Generatorachse verlaufenden Antriebsachse angeordnet sind.

Insbesondere können das Getriebe und die Freilaufeinheit als bauliche Einheit mit wenigstens einem gemeinsamen Strukturbauteil ausgebildet sein. Das gemeinsame Strukturbauteil kann beispielsweise ein Gehäuse sein, dass sowohl das Gehäuse des Getriebes als auch das Gehäuse der Freilaufeinheit bildet.

Mit noch weiterem Vorteil ist das Getriebe ein Hohlwellengetriebe, durch das eine der Achswellen hindurchgeführt sein kann. Dadurch entsteht die vorteilhafte Möglichkeit, das Getriebe und die einzige Freilaufeinheit in einer gemeinsamen Antriebsachse anzuordnen. Die Wirkverbindung zum Generator in der Generatorachse kann beispielsweise eine Zahnradstufe umfassen.

### BEVORZUGTES AUSFÜHRUNGSBEISPIEL DER ERFINDUNG

Weitere, die Erfindung verbessernde Maßnahmen werden nachstehend gemeinsam mit der Beschreibung eines bevorzugten Ausführungsbeispiels der Erfindung anhand der Figuren näher dargestellt. Es zeigt:
- Figur 1: ein erstes Ausführungsbeispiel einer Achsen-Generator-Einheit, wobei sich sämtliche Komponenten in einer gemeinsamen Wirkachse befinden,
- Figur 2: ein abgewandeltes Ausführungsbeispiel einer Achsen-Generator-Einheit mit einer Antriebsachse und einer parallel zur Antriebsachse ausgebildeten Generatorachse, wobei eine Freilaufeinheit in der Antriebsachse angeordnet ist und wobei ein Generator und ein Getriebe in der Generatorachse angeordnet sind,
- Figur 3: eine perspektivische Ansicht eines Chassis eines Anhängers mit einer integrierten Achsen-Generator-Einheit,
- Figur 4: eine Ansicht einer alternativen Ausführungsform einer Achsen-Generator-Einheit,
- Figur 5: ein erstes Ausführungsbeispiel einer Freilaufeinheit mit Kugelkörpern als Klemmkörper,
- Figur 6: ein Ausführungsbeispiel einer Freilaufeinheit mit Klemmkörpern in speziell konturierter Form und
- Figur 7: eine Freilaufeinheit, aufweisend eine Klinke und ein Zahnrad.

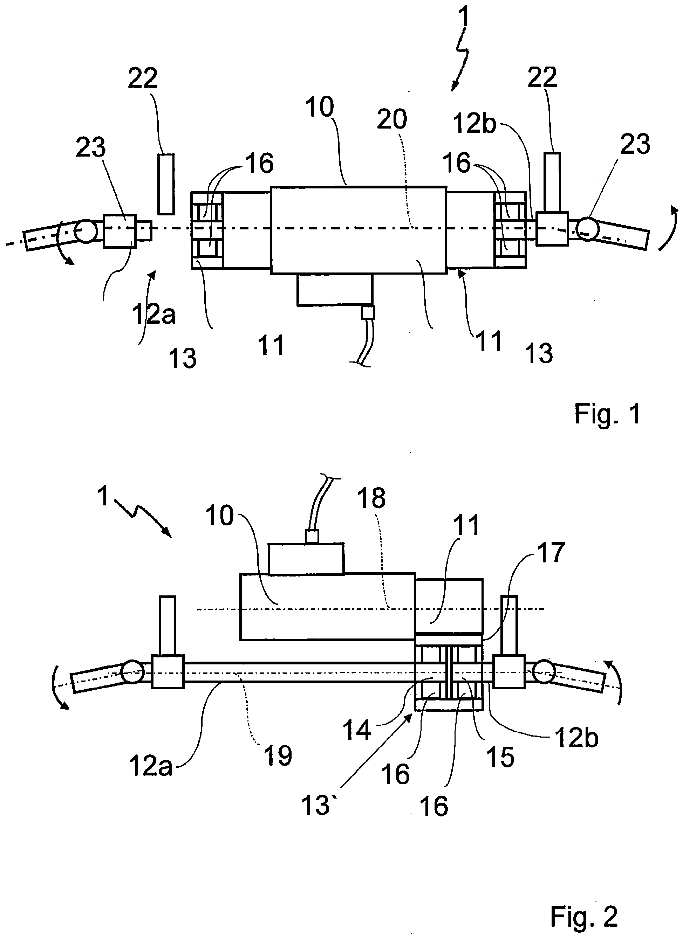

Figur 1 zeigt eine schematische Ansicht einer Achsen-Generator-Einheit 1, die an einem Nutzfahrzeug oder an einem Anhänger angeordnet werden kann, wofür Achsaufhängungen 22 gezeigt sind. Die außerhalb der Gleichlaufgelenke 23 gezeigten abgewinkelten Abschnitte der Achswellen 12a und 12b werden mit den Radnaben und schließlich mit den Rädern des Fahrzeuges verbunden.

Im Bereich zwischen den beiden Achsaufhängungen 22 befinden sich die die Erfindung im Wesentlichen bildenden Komponenten der Achsen-Generator-Einheit 1 mit einem Generator 10 zur Erzeugung von elektrischem Strom. Der Generator 10 erstreckt sich dabei in einer Wirkachse 20. In den entlang der Wirkachse 20 gegenüberliegenden Endbereichen des Generators 10 befinden sich Getriebe 11, die mit jeweiligen Freilaufeinheiten 13 verbunden sind. Die Freilaufeinheiten 13 ermöglichen eine Drehmomentübertragung zwischen den Achswellen 12a und 12b und dem Generator 10 in einer ersten Drehrichtung, während in einer zweiten Drehrichtung ein Freilauf erfolgt, sodass keine Drehmomentübertragung erfolgt. Hierfür weisen die Freilaufeinheiten 13 bei dem in Fig. 1 gezeigten Ausführungsbeispiel Klemmkörper 16 auf. Die Freilaufeinheiten 13 können jedoch auch ohne Klemmkörper 16 ausgeführt sein, beispielsweise mit einer entsprechenden Federanordnung oder mit einer Klinken-Zahnradeinheit.

In der Geradeausfahrt des Fahrzeuges rotieren die beiden Achswellen 12a und 12b in der Regel mit gleichen Drehzahlen und Drehrichtungen, insbesondere wenn die Achsen-Generator-Einheit 1 an einem Anhänger oder einem Nutzfahrzeug angeordnet ist, die nicht die mit einer Brennkraftmaschine angetriebene Achse bildet. Bei einer Kurvenfahrt unterscheidet sich die Drehgeschwindigkeit der ersten Achswelle 12a von der Drehgeschwindigkeit der zweiten Achswelle 12b, was durch die Freilaufeinheiten 13 ausgeglichen werden kann. In nicht näher gezeigte Weise sind die Freilaufeinheiten 13 mit Eingangswellen der Getriebe 11 verbunden, und die Getriebe 11 sind mit Ausgangswellen mit einem Rotor des einzigen Generators 10 verbunden.

Anders als in Figur 1 dargestellt, können der Generator 10, die Getriebe 11 und die Freilaufeinheiten 13 in einem gemeinsamen Gehäuse untergebracht sein. Beispielsweise kann dieses Gehäuse Teil eines die Achswellen 12a, 12b umgebenden Achsrohrs sein.

Figur 2 zeigt in Abwandlung zu Figur 1 ein Ausführungsbeispiel einer Achsen-Generator-Einheit 1 mit einer ersten Achswelle 12a und einer zweiten Achswelle 12b und mit einer abgewandelten Ausführung einer Freilaufeinheit 13', in die beide Achswellen 12a und 12b einlaufen. Die Freilaufeinheit 13' weist den jeweiligen Achswellen 12a und 12b zugeordnete Klemmkörper 16 auf. Die Klemmkörper 16 wirken mit einem gemeinsamen Ausgangselement 17 zusammen, welches beispielsweise einen Außenring der Freilaufeinheit 13 bilden kann. Der Außenring kann auf vorteilhafte Weise in Eingriff gebracht sein mit einem Getriebeteil des Getriebes 11. Der Generator 10 und das Getriebe 11 sind beabstandet angeordnet zu den Achswellen 12a und 12b, die sich in einer Antriebsachse 19 erstrecken. Der Generator 10 und das Getriebe 11 erstrecken sich dabei beabstandet zur Antriebsachse 19 in einer Generatorachse 18, die parallel zur Antriebsachse 19 verläuft. Die gezeigte Ausführungsform der Achsen-Generator-Einheit 1 kann kürzer gebaut werden als das Ausführungsbeispiel gemäß Figur 1 und die Freilaufeinheit 13 kann lediglich 1-fach vorhanden sein. Diese muss ggf. als Sonderanfertigung bereitgestellt werden, insbesondere wenn die Freilaufeinheit 13 mit einem Eingangselement 14 und einem separaten Eingangselement 15 für die jeweiligen Achswellen 12a und 12b aufgeführt ist, die mit den zugeordneten Klemmkörpern 16 zusammenwirken.

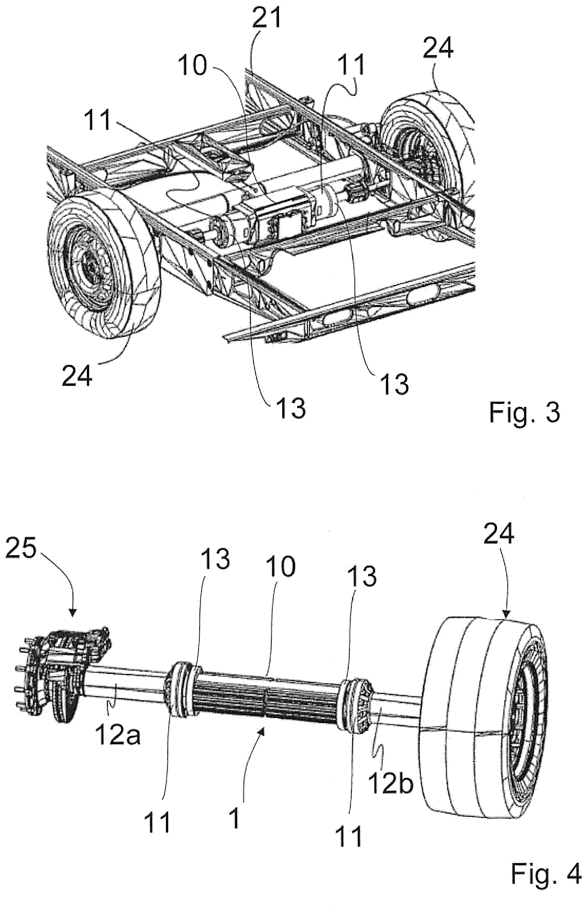

Figur 3 zeigt eine perspektivische Ansicht eines Fahrzeugrahmens 21 eines Anhängers oder eines Nutzfahrzeuges mit einer nicht angetriebenen Achse, die einen Generator 10 und seitlich jeweils ein Getriebe 11 aufweist. Die Getriebe 11 sind dabei mit den Achsen verbunden, an denen die Räder 24 angebracht sind. Sowohl der Generator 10 als auch die Getriebe 11 sind in den Fahrzeugrahmen 21 integriert, insbesondere im Fahrzeugrahmen 21 eingefasst.

Figur 4 zeigt eine perspektivische Ansicht einer Achsen-Generator-Einheit 1 mit einem Generator 10 und mit außenseitig am Generator 10 angeordneten Freilaufeinheiten 13. Den Freilaufeinheiten 13 folgen jeweils zugeordnete Getriebe 11, die mit den Achswellen 12a und 12b zusammenwirken. Die Darstellung zeigt in Anordnung an der ersten Achswelle 12a eine Achsbaugruppe 25 und beispielhaft in Anordnung an die zweite Achswelle 12b ein Rad 24.

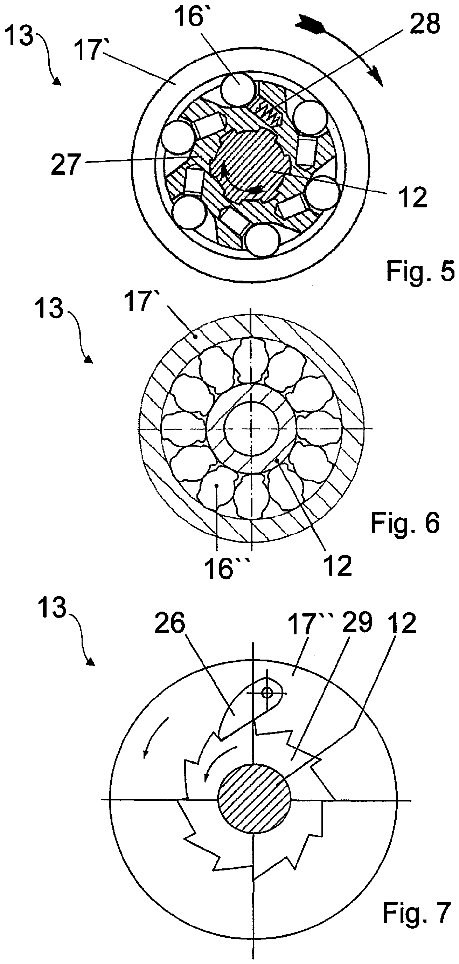

Figur 5 zeigt ein Ausführungsbeispiel einer Freilaufeinheit 13 mit einer Achswelle 12, mit einem Mitnehmer 27 und mit einem Ausgangselement 17'. Am Mitnehmer 27 sind Klemmkörper 16' angeordnet, die mit einer Feder 28 in einer Klemmrichtung vorgespannt sind. Wird das Ausgangselement 17' gegenüber der Achswelle 12 in gezeigter Pfeilrichtung in Rotation versetzt, so erfolgt eine Kompression der Feder 28 und die Klemmkörper 16' befinden sich in einer Freigabestellung, sodass das Ausgangselement 17' in Form des Ringkörpers im Uhrzeigersinn relativ zur Achswelle 12 rotieren kann. Wird hingegen das Ausgangselement 17' in einer Richtung gegen den Uhrzeigersinn relativ zur Achswelle 12 in Rotation versetzt, so werden die Klemmkörper 16' insbesondere durch die Feder 28 in eine Sperrstellung überführt, sodass die Drehbewegung des Ausgangselementes 17' gegenüber der Achswelle 12 blockiert ist und ein Drehmoment übertragen werden kann.

Figur 6 zeigt ein Ausführungsbeispiel einer Freilaufeinheit 13 mit einer Achswelle 12 und mit einem Ausgangselement 17', wobei Klemmkörper 16" zwischen der Achswelle 12 und dem Ausgangselement 17' in mehrfacher Anordnung vorgesehen sind, um in gleicher Weise eine Sperrwirkung und eine Freigabewirkung zu erzielen, wie diese bereits in Zusammenhang mit der Ausführung gemäß Figur 5 beschrieben ist.

Figur 7 zeigt eine mögliche Ausführungsform einer Freilaufeinheit 13 mit einer Achswelle 12, auf der ein Zahnkranz 29 angebracht ist. Wird das Ausgangselement 17" entgegen dem Uhrzeigersinn in Rotation versetzt, so bewirkt die Ausgestaltung der Klinke 26 einen Freilauf. Wird hingegen das Ausgangselement 17" im Uhrzeigersinn in Rotation versetzt, so kann die federvorgespannte Klinke 26 über die Zähle des Zahnkranzes 29 abgleiten, sodass keine Sperrwirkung entsteht.

Die Erfindung beschränkt sich in ihrer Ausführung nicht auf das vorstehend angegebene, bevorzugte Ausführungsbeispiel. Vielmehr ist eine Anzahl von Varianten denkbar, welche von der dargestellten Lösung auch bei grundsätzlich anders gearteten Ausführungen Gebrauch macht. Sämtliche aus den Ansprüchen, der Beschreibung oder den Zeichnungen hervorgehenden Merkmale und/oder Vorteile, einschließlich konstruktiver Einzelheiten oder räumlicher Anordnungen, können sowohl für sich als auch in den verschiedensten Kombinationen erfindungswesentlich sein.

### Bezugszeichenliste:

- 1: Achsen-Generator-Einheit
- 10: Generator
- 11: Getriebe
- 12: Achswelle
- 12a: erste Achswelle
- 12b: zweite Achswelle
- 13: Freilaufeinheit
- 13': Freilaufeinheit
- 14: Eingangselement
- 15: Eingangselement
- 16: Klemmkörper
- 16': Klemmkörper
- 16": Klemmkörper
- 17: Ausgangselement
- 17': Ausgangselement
- 17": Ausgangselement
- 18: Generatorachse
- 19: Antriebsachse
- 20: Wirkachse
- 21: Fahrzeugrahmen
- 22: Achsaufhängung
- 23: Gleichlaufgelenk
- 24: Rad
- 25: Achsbaugruppe
- 26: Klinke
- 27: Mitnehmer
- 28: Feder
- 29: Zahnkranz

## Patentansprüche

1. Achsen-Generator-Einheit (1) für ein Fahrzeug, insbesondere Nutzfahrzeug oder Anhänger, mit einem Generator (10) zur Erzeugung von elektrischem Strom, wobei der Generator (10) zwischen einer ersten Achswelle (12a) und einer zweiten Achswelle (12b) angeordnet und mittels einer Antriebsverbindung mit diesen antriebsverbunden ist,
**dadurch gekennzeichnet,**
**dass** zwischen den beiden Achswellen (12a, 12b) ein einziger Generator (10) vorgesehen ist und die Antriebsverbindung zwischen den Achswellen (12a, 12b) und dem Generator (10) wenigstens eine Freilaufeinheit (13, 13') aufweist.

2. Achsen-Generator-Einheit (1) nach Anspruch 1,
**dadurch gekennzeichnet,**
**dass** eine erste Freilaufeinheit (13) zwischen dem Generator (10) und der ersten Achswelle (12a) angeordnet ist und dass eine zweite Freilaufeinheit (13) zwischen dem Generator (10) und der zweiten Achswelle (12b) angeordnet ist.

3. Achsen-Generator-Einheit (1) nach Anspruch 1 oder 2,
**dadurch gekennzeichnet,**
**dass** eine erste Freilaufeinheit (13) zwischen einem Getriebe (11) und der ersten Achswelle (12a) und eine zweite Freilaufeinheit (13) zwischen einem weiteren Getriebe (11) und der zweiten Achswelle (12b) angeordnet sind.

4. Achsen-Generator-Einheit (1) nach einem der Ansprüche 1 bis 3,
**dadurch gekennzeichnet,**
**dass** die Freilaufeinheit (13') mit einem ersten Eingangselement (14) und mit einem zweiten Eingangselement (15) ausgebildet ist, wobei die Eingangselemente (14, 15) über jeweilige Klemmkörper (16) mit einem Ausgangselement (17) der Freilaufeinheit (13') zusammenwirken.

5. Achsen-Generator-Einheit (1) nach Anspruch 4,
**dadurch gekennzeichnet,**
**dass** das Ausgangselement (17) der Freilaufeinheit (13') einen Außenring der Freilaufeinheit (13') bildet, mit dem die Klemmkörper (16) beider Eingangselemente (14, 15) zusammenwirken und wobei der Außenring mit dem Getriebe (11) wirkverbunden ist.

6. Achsen-Generator-Einheit (1) nach einem der vorgenannten Ansprüche,
**dadurch gekennzeichnet,**
**dass** die erste Achswelle (12a) und die zweite Achswelle (12b) mit der Freilaufeinheit (13, 13'), mit dem Generator (10) und mit dem Getriebe (11) in einer gemeinsamen Wirkachse (20) angeordnet sind.

7. Achsen-Generator-Einheit (1) nach einem der Ansprüche 1 bis 5,
**dadurch gekennzeichnet,**
**dass** der Generator (10) und das Getriebe (11) in einer Generatorachse (18) angeordnet sind und dass die erste Achswelle (12a) und die zweite Achswelle (12b) mit der Freilaufeinheit (13, 13') in einer parallel zur Generatorachse (18) verlaufenden Antriebsachse (19) angeordnet sind.

8. Achsen-Generator-Einheit (1) nach einem der vorgenannten Ansprüche,
**dadurch gekennzeichnet,**
**dass** das Getriebe (11) und die Freilaufeinheit (13, 13') als bauliche Einheit mit wenigstens einem gemeinsamen Strukturbauteil ausgebildet sind.

9. Achsen-Generator-Einheit (1) nach Anspruch 8,
**dadurch gekennzeichnet,**
**dass** das gemeinsame Strukturbauteil des Getriebes (11) und der Freilaufeinheit (13, 13') ein Gehäuse ist.

10. Achsen-Generator-Einheit (1) nach einem der vorgenannten Ansprüche,
**dadurch gekennzeichnet,**
**dass** das Getriebe (11) ein Hohlwellengetriebe ist, durch das eine der Achswellen (12a, 12b) hindurchgeführt ist.
